# FASCICULE DE BREVET EUROPEEN

(11) **EP 1 262 630 B1**
(45) Date de publication et mention de la délivrance du brevet: **06.04.2005**
(21) Numéro de dépôt: 02291314.9
(22) Date de dépôt: 30.05.2002
(51) Int. Cl.: F01D 5/08, F04D 29/58

(54) **Dispositif de prélèvement d'air par écoulement centripète**
Zentripetale Abblasvorrichtung
Centripetal air bleed device

(30) Priorité: 31.05.2001 FR 0107121
(43) Date de publication de la demande: 04.12.2002
(73) Titulaire: SNECMA MOTEURS, 75015 Paris (FR)
(72) Inventeur: Escure, Didier, René, André, 77176 Nandy (FR); Lestoille, Patrick, Didier, Michel, 77300 Fontainebleau (FR); Miraucourt, Gérard, Gabriel, 77170 Brie Comte Robert (FR); Vareille, Pascal, Didier, 91000 Evry (FR)

(56) Documents cités:
- FR-A- 2 672 943
- US-A- 4 415 310
- US-A- 4 595 339
- US-A- 4 787 820
- US-A- 5 472 313

## Description

L'invention concerne un dispositif de prélèvement d'air dans un compresseur de turbomachine.

Elle concerne plus précisément un dispositif de prélèvement d'air par écoulement centripète prévu entre deux disques d'un compresseur de turbomachine, ledit dispositif comportant un support annulaire fixé sur une face de l'un desdits disques et une pluralité de tubes de prélèvement d'air montés sensiblement radialement dans des orifices ménagés dans ledit support, chaque tube étant équipé de moyens pour réduire les vibrations dudit tube lors du fonctionnement de la turbomachine.

Un tel dispositif est décrit dans le brevet US 5,472,313. Un tube amortisseur est enfilé à l'intérieur de la partie radialement intérieure de chaque tube de prélèvement. Le tube amortisseur présente dans sa partie radialement extérieure des fentes longitudinales de manière à former des languettes ou pétales axiales qui, sous l'effet de la force centrifuge, lors du fonctionnement de la turbomachine, sont plaquées contre la paroi interne du tube de prélèvement. Le frottement entre les pétales du tube amortisseur interne et le tube de prélèvement externe dissipe de l'énergie de déformation et donc réduit les contraintes dynamiques dans le tube externe.

Des trous traversant sont ménagés à l'extrémité des fentes longitudinales qui sont les zones de concentration de contraintes. Ceci nécessite un usinage supplémentaire, et la durée de vie de ces tubes amortisseurs internes est inférieure à 100 000 cycles.

La fréquence du mode 1F pour le tube de prélèvement centripète de l'étage 6 du turboréacteur GE 90-115 B est de 950 Hz.

Ce moteur comportant 12 tubes de prélèvement la fréquence du mode 8 F au régime de 7 125 tr/min est de 950 Hz (7 125 x 8/60). Cette fréquence est égale à la fréquence du mode 1 F.

Un premier but de l'invention est de réduire la contrainte dynamique dans le tube de prélèvement par dissipation de l'énergie de déformation.

Un deuxième but de l'invention est de proposer un dispositif de prélèvement d'air par écoulement centripète dans lequel le système d'amortissement des vibrations des tubes de prélèvement permet d'augmenter de façon notable la fréquence du premier mode de flexion dit mode 1F, afin que le croisement entre le mode 1F et la source d'excitation n'apparaisse plus.

L'invention atteint son but par le fait que les moyens pour réduire les vibrations d'un tube de prélèvement comportent un tube amortisseur retenu dans un orifice du support annulaire et entourant la partie radialement extérieure dudit tube de prélèvement, l'extrémité radialement intérieure dudit tube amortisseur enserrant une zone correspondante dudit tube de prélèvement et un espace annulaire étant prévu entre la zone médiane dudit tube amortisseur et ledit tube de prélèvement.

L'amortissement du système de prélèvement centripète est ainsi réalisé par deux principes. La souplesse au niveau du contact entre le tube amortisseur externe et le tube de prélèvement agit comme un ressort ; la raideur au niveau de ce contact dissipe de l'énergie comme un ressort. En outre, le tube amortisseur externe peut être soumis à des flexions. Là raideur du tube amortisseur en flexion permet une dissipation de l'énergie.

Le dispositif proposé permet une réduction de la contrainte dynamique dans le tube de prélèvement par dissipation de l'énergie de déformation, et une augmentation de la fréquence du premier mode de flexion, dit mode 1F, du fait de l'augmentation de la raideur équivalente du système de prélèvement.

En outre, le tube amortisseur externe proposé étant exempt de fentes et de trous à l'extrémité des fentes, sa fabrication est plus facile que l'usinage d'un tube amortisseur interne à pétales.

Selon un premier mode de réalisation, l'extrémité radialement intérieure du tube amortisseur est rétreinte et est en contact avec la paroi périphérique du tube de prélèvement selon une pluralité de zones axiales.

Selon un deuxième mode de réalisation, le tube de prélèvement présente au droit de l'extrémité radialement intérieure du tube amortisseur, un collet s'adaptant dans ladite extrémité. Avantageusement, ce collet présente une pluralité de plats afin de diminuer les surfaces en contact.

D'autres avantages et caractéristiques de l'invention ressortiront à la lecture de la description suivante faite à titre d'exemple et en référence aux dessins annexés dans lesquels :
la figure 1 est une demi-coupe axiale d'un rotor de compresseur de turbomachine qui montre l'emplacement du dispositif de prélèvement d'air par écoulement centripète selon l'invention ;
la figure 2 montre à plus grande échelle et en coupe le dispositif selon l'invention ;
la figure 3 est une coupe axiale du dispositif par un plan passant par l'axe d'un tube de prélèvement selon un premier mode de réalisation ;
la figure 4 est une coupe selon la ligne IV-IV de la figure 3 ;
la figure 5 est une vue en perspective du support annulaire et d'un tube amortisseur externe ;
la figure 6 montre une variante de réalisation du tube de prélèvement ; et
la figure 7 est une coupe selon la ligne VII-VII de la figure 6.

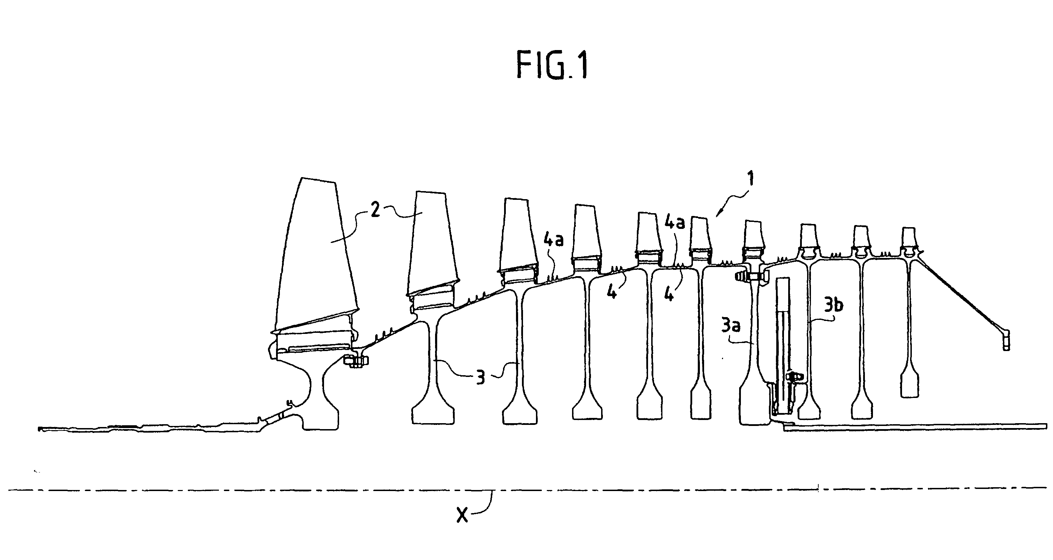

La figure 1 montre un rotor 1 de compresseur à haute pression d'un turboréacteur d'axe X qui comporte plusieurs étages d'aubes 2 montées à la périphérie de disques 3. Deux disques consécutifs sont reliés par des viroles annulaires 4 équipées de léchettes 4a assurant l'étanchéité avec les extrémités internes des couronnes d'aubes fixes du stator. Les couronnes d'aubes fixes, non montrées sur la figure 1, sont intercalées entre les couronnes d'aubes mobiles 2.

Un prélèvement d'air est effectué entre deux étages de disque. Cet air prélevé sert au refroidissement de la turbine à haute pression qui entraîne le compresseur à haute pression 1.

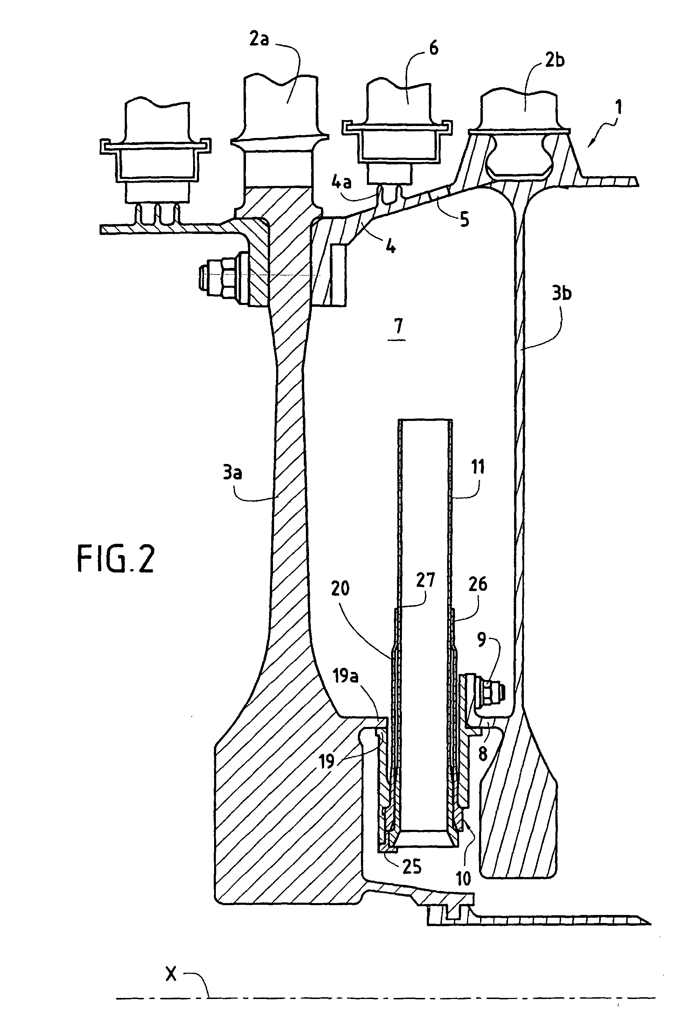

Ainsi que cela est montré sur la figure 2, des orifices 5 sont ménagés dans la virole 4 reliant les disques 3a et 3b, en aval des extrémités internes des aubes fixes 6, disposées entre la couronne d'aubes 2a du disque 3a et la couronne d'aubes 2b du disque 3b.

L'air prélevé par les orifices 5 pénètre dans l'espace annulaire 7 délimité par les faces en regard des disques 3a et 3b.

Le disque aval 3b comporte dans sa région interne un collet annulaire 8 de section en L sur lequel est fixé par des boulons 9 un anneau 10 d'axe X qui porte une pluralité de tubes de prélèvement d'air 11 disposés sensiblement axialement.

Comme cela est montré sur la figure 5, l'anneau 10 présente une paroi radiale avant 12 et une paroi radiale arrière 13 reliées par une âme 14 ayant une pluralité de trous 15 séparés par des ouvertures rectangulaires 16. La paroi radiale arrière 13 présente des orifices 17 pour accueillir les boulons 9, et une nervure annulaire 18 prévue pour s'engager sous le collet 8 afin de permettre le positionnement radial de l'anneau 10. La paroi radiale avant 12 comporte également une nervure annulaire 19 qui se positionne au voisinage d'une nervure correspondante 19a prévue sur le disque 3a, et visible sur la figure 2.

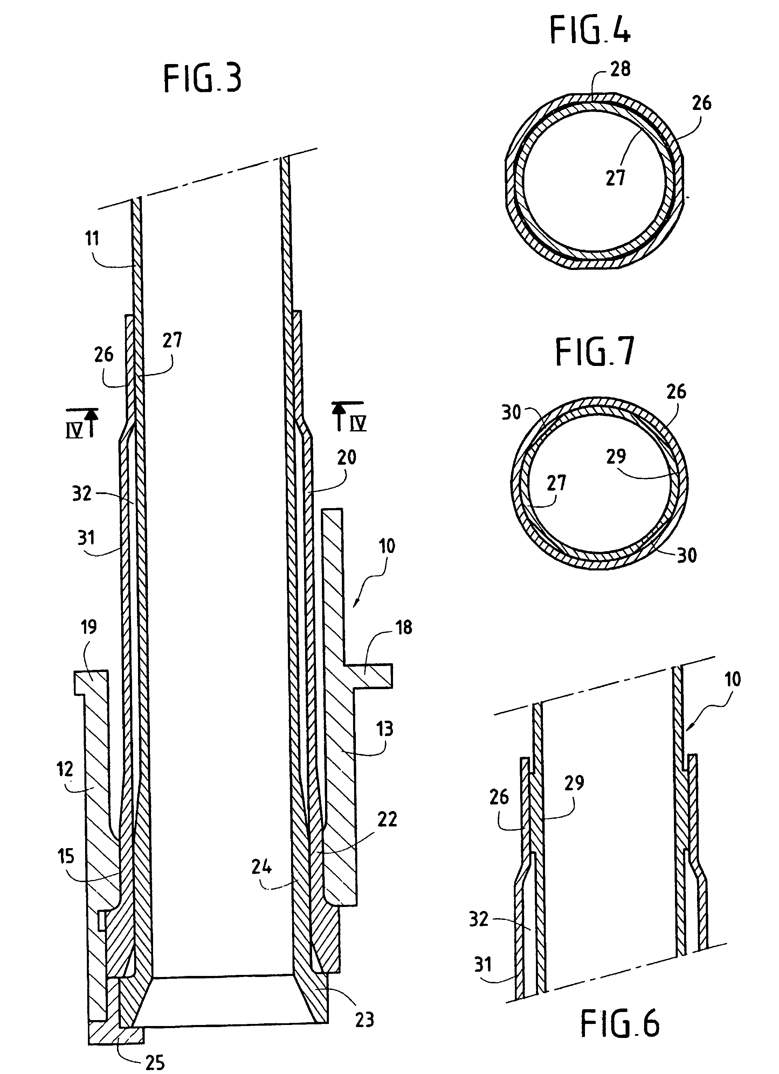

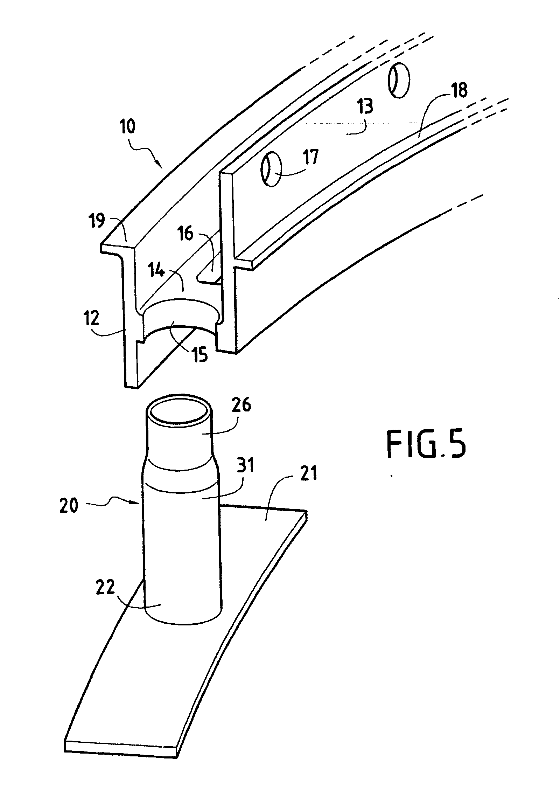

Ainsi que cela est montré sur la figure 3, la partie radialement extérieure du tube de prélèvement 11 loge à l'intérieur d'un tube amortisseur externe 20. Ce tube externe 20 comporte à son extrémité radialement interne une embase 21 rectangulaire qui vient en appui contre la face interne de l'âme 14 de l'anneau et recouvre au moins en partie les ouvertures rectangulaires 16. La partie radialement extérieure 22 du tube externe 20 a un diamètre externe sensiblement égal à celui des trous 15 ménagés dans l'âme 14 de l'anneau 10, afin que cette partie 22 puisse être insérée de manière serrée dans un trou 15. Lorsque tous les tubes externes 20 sont montés dans les trous 15, les embases 21 forment ensemble un anneau qui obture les ouvertures rectangulaires 16.

Le tube de prélèvement 11 présente dans sa partie radialement extérieure un bourrelet 23 qui vient en appui contre l'extrémité radialement intérieure du tube externe 20. Ce bourrelet 23 se prolonge à l'intérieur de la partie radialement intérieure 22 du tube externe 20 par un collet 24 dont le diamètre extérieur est sensiblement égal au diamètre extérieur de la partie 22 afin que le collet 24 soit serré dans cette partie 22. La référence 25 désigne un anneau de blocage du tube externe 20 et du tube de prélèvement 11 sur l'anneau 10. Cet anneau de blocage 25 a une section en T renversé, dont les ailes appuient sur les faces d'extrémité radialement intérieure de la paroi radiale avant 12 de l'anneau 10 et du tube de prélèvement 11, et dont l'âme loge entre la face arrière de la paroi radiale avant 12 et les bourrelets 23 des tubes de prélèvement 11. Les ailes de cet anneau 25 peuvent être différenciées en longueur ainsi que radialement afin d'assurer un montage prévisible, c'est-à-dire toujours dans le même sens.

L'extrémité radialement externe 26 du tube externe 20 est en contact avec la zone correspondante 27 du tube de prélèvement 11.

Selon un premier mode de réalisation montré sur les figures 3 et 4, l'extrémité 26 est rétreinte et comporte une pluralité de zones axiales 28 en contact serré contre la paroi externe de la zone 27. Ces zones axiales 28 sont réalisées par exemple par serrage de l'extrémité 26 du tube externe 20 au moyen de mâchoires. La figure 4 montre quatre zones axiales 28 diamétralement opposées deux par deux, mais le nombre de zones axiales 28 peut être différent de quatre.

Les figures 6 et 7 montrent un deuxième mode de réalisation du contact entre l'extrémité 26 du tube externe 20 et la zone 27 du tube de prélèvement 11. Ici la zone 27 comporte un collet 29 présentant une pluralité de plats 30. Le diamètre externe du collet 29 est sensiblement égal au diamètre intérieur de l'extrémité 26 du tube externe 20, afin d'assurer un contact positif entre les deux tubes 20 et 11 au droit du collet 29.

Quelque soit le mode de réalisation du contact entre l'extrémité radialement externe 26 du tube externe 20 et le tube de prélèvement 11, la zone médiane 31 du tube externe 20 est hors de contact du tube de prélèvement 11, et est séparée de ce dernier par une chambre annulaire 32.

Ainsi, le tube de prélèvement 11 est retenu de manière serrée par son extrémité radialement extérieure dans le tube externe 20 et est retenu avec une certaine souplesse par l'extrémité radialement intérieure 26 du tube externe 20. Le tube externe 20 agit à cet endroit à la manière d'un ressort et la raideur au niveau de ce contact dissipe de l'énergie comme un ressort.

Du fait de la présence de la chambre annulaire 32, le tube externe 20 est également soumis à des couples de flexion vibratoires. La raideur en flexion du tube externe 20 permet également une dissipation de l'énergie. Du fait de l'augmentation de la raideur équivalente de l'ensemble des deux tubes 20 et 11, par rapport à l'état de la technique dévoilé par US 5,472,313, la fréquence du premier mode de flexion, dit mode 1F, est fortement augmentée.

Ainsi, l'utilisation d'un système d'amortissement avec un tube externe 20 amortisseur entraîne une augmentation de la fréquence du mode 1F dans l'étage 6 du compresseur à haute pression du turboréacteur GE 90-115B, de 950 Hz à 1 653 Hz, pour une longueur du tube 20 de 58,1 mm et de 950 Hz à 1921 Hz pour une longueur du tube 20 de 45 mm. Le croisement entre le mode 1F et le mode 8N n'apparaît plus, car la fréquence maximale que peut atteindre le mode 8N dans le cas du compresseur à haute pression du GE 90-115B est de 1505 Hz.

## Revendications

1. Dispositif de prélèvement d'air par écoulement centripète prévu entre deux disques (3a, 3b) d'un compresseur (1) de turbomachine, ledit dispositif comportant un support annulaire (10) fixé sur une face de l'un desdits disques (3a, 3b) et une pluralité de tubes de prélèvement (11) d'air montés sensiblement radialement dans des orifices (15) ménagés dans ledit support (10), chaque tube (11) étant équipé de moyens pour réduire les vibrations dudit tube (11) lors du fonctionnement de la turbomachine,
**caractérisé par le fait que** les moyens pour réduire les vibrations d'un tube de prélèvement (11) comportent un tube amortisseur (20) retenu dans un orifice (15) du support annulaire (10) et entourant la partie radialement extérieure dudit tube de prélèvement (11), l'extrémité radialement intérieure (26) dudit tube amortisseur (20) enserrant une zone correspondante 27 dudit tube de prélèvement (11) et un espace annulaire (32) étant prévu entre la zone médiane (31) dudit tube amortisseur (20) et ledit tube de prélèvement (11).

2. Dispositif selon la revendication 1, **caractérisé par le fait que** l'extrémité radialement intérieure (26) du tube amortisseur (20) est rétreinte et est en contact avec la paroi périphérique du tube de prélèvement (11) selon une pluralité de zones axiales (28).

3. Dispositif selon la revendication 1, **caractérisé par le fait que** le tube de prélèvement (11) présente au droit de l'extrémité radialement intérieure (26) du tube amortisseur (20), un collet (29) s'adaptant dans ladite extrémité (26).

4. Dispositif selon la revendication 3, **caractérisé par le fait que** le collet (29) comporte une pluralité de plats (30).

## Patentansprüche

1. Vorrichtung zur Luftentnahme durch zentripetales Strömen, die zwischen zwei Scheiben (3a, 3b) eines Turbotriebwerk-Verdichters (1) vorgesehen ist, wobei diese Vorrichtung eine ringförmige Halterung (10), die an einer Seite einer dieser Scheiben (3a, 3b) befestigt ist, sowie eine Vielzahl von Luftentnahmerohren (11), die im Wesentlichen radial in Öffnungen (15) in dieser Halterung (10) angebracht sind, umfasst, wobei jedes Rohr (11) mit Mitteln zur Verringerung der Vibrationen dieses Rohrs (11) bei Betrieb des Turbotriebwerks ausgestattet ist,
**dadurch gekennzeichnet,**
**dass** die Mittel zur Verringerung der Vibrationen eines Entnahmerohrs (11) ein Dämpfungsrohr (20) umfassen, das in einer Öffnung (15) der ringförmigen Halterung (10) festgehalten wird und den radial äußeren Teil dieses Entnahmerohrs (11) umgibt, wobei das radial innere Ende (26) dieses Dämpfungsrohrs (20) einen entsprechenden Bereich (27) dieses Entnahmerohrs (11) umspannt und wobei ein ringförmiger Zwischenraum (32) zwischen dem mittleren Bereich (31) dieses Dämpfungsrohrs (20) und diesem Entnahmerohr (11) vorgesehen ist.

2. Vorrichtung nach Anspruch 1,
**dadurch gekennzeichnet,**
**dass** das radial innere Ende (26) des Dämpfungsrohrs (20) reduziert ist und sich in einer Vielzahl von axialen Bereichen (28) mit der außen umlaufenden Wand des Entnahmerohrs (11) in Kontakt befindet.

3. Vorrichtung nach Anspruch 1,
**dadurch gekennzeichnet,**
**dass** das Entnahmerohr (11) vor dem radial inneren Ende (26) des Dämpfungsrohrs (20) einen Rand (29) aufweist, der in dieses Ende (26) eingepasst ist.

4. Vorrichtung nach Anspruch 3,
**dadurch gekennzeichnet,**
**dass** der Rand (29) eine Vielzahl von Flachbereichen (30) aufweist.

## Claims

1. Centripetal-flow air bleed device provided between two discs (3a, 3b) of a turbomachine compressor (1), the said device comprising an annular support (10) fixed to a face of one of the said discs (3a, 3b) and a plurality of air bleed tubes (11) mounted substantially radially in orifices (15) provided in the said support (10), each tube (11) being equipped with means for reducing the vibrations of the said tube (11) during the operation of the turbomachine, **characterized in that** the means for reducing the vibrations of a bleed tube (11) comprise a damper tube (20) which is retained in an orifice (15) of the annular support (10) and surrounds the radially outer part of the said bleed tube (11), the radially inner end (26) of the said damper tube (20) gripping around a corresponding region (27) of the said bleed tube (11) and an annular space (32) being provided between the mid-region (31) of the said damper tube (20) and the said bleed tube (11).

2. Device according to Claim 1, **characterized in that** the radially inner end (26) of the damper tube (20) is constricted and is in contact with the peripheral wall of the bleed tube (11) in a plurality of axial regions (28) .

3. Device according to Claim 1, **characterized in that** the bleed tube (11) has, in line with the radially inner end (26) of the damper tube (20), a collar (29) which fits into the said end (26).

4. Device according to Claim 3, **characterized in that** the collar (29) comprises a plurality of flat surfaces (30).
